(19) Europäisches Patentamt
European Patent Office
Office européen des brevets

(11) Publication number: 0 167 304
A1

# (12) EUROPEAN PATENT APPLICATION

(21) Application number: 85304041.8

(22) Date of filing: 06.06.85

(51) Int. Cl.⁴: C 08 G 73/12
C 08 L 79/08
//C08L63:10

(30) Priority: 07.06.84 GB 8414594

(43) Date of publication of application:
08.01.86 Bulletin 86/2

(84) Designated Contracting States:
AT BE CH DE FR GB IT LI LU NL SE

(71) Applicant: The British Petroleum Company p.l.c.
Britannic House Moor Lane
London EC2Y 9BU(GB)

(72) Inventor: Robertson, Frank Charles
The British Petroleum Company p.l.c. Chertsey Road
Sunbury-on-Thames Middlesex, TW16 7LN(GB)

(74) Representative: Eastman, Hugh Leonard et al,
BP INTERNATIONAL LIMITED Patents Division Chertsey Road
Sunbury-on-Thames Middlesex, TW16 7LN(GB)

## (54) Addition polyimide composition.

(57) A curable thermosetting polyimide composition comprising a major proportion of a polyimide prepolymer and a minor proportion of a vinyl ester. The polyimide prepolymer may be N,N'-bis-imide having the general formula:

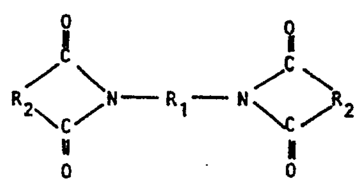

where $R_1$ is a divalent radical containing at least one carbon atom and

$R_2$ is a divalent radical containing a carbon-carbon double bond

The composition is suitable for use as a matrix material for fibre reinforced plastic compositions and may be used to prepare prepreg materials.

EP 0 167 304 A1

# ADDITION POLYIMIDE COMPOSITION

The present invention relates to thermosetting polyimide compositions.

Reinforced thermoset plastics are increasingly being used to replace more traditional materials, particularly in the automotive, aerospace and marine industries. The reinforced plastics generally comprise fibres e.g. glass or carbon fibres bonded in a suitable matrix material e.g. a polyester or epoxy resin.

Bis-maleimide resins are known and it is also known to use such resins as a matrix material in reinforced plastic compositions. However, cured polyimide resins have a relatively high cross-link density and so they have a relatively low impact resistance.

It has now been found that the impact resistance of thermoset polyimides can be increased by the addition of a vinyl ester to the composition before curing. The addition of the vinyl ester to the polyimide may also reduce the amount of water absorbed by the cured composition and the rate of water absorption.

Thus according to the present invention a curable thermosetting polyimide composition comprises a major proportion of a polyimide prepolymer and a minor proportion of a vinyl ester.

The present invention includes a process for producing a cured thermoset polyimide composition, a cured thermoset polyimide composition, and a prepreg composition comprising the thermosetting polyimide composition according to the present invention.

The polyimide prepolymers suitable for use in the present invention include all unsaturated polyimides such as bis-imides,

tris-imides, tetra-imides etc. A number of bis-imides, such as, for example, bis-maleimides, and at least one tris-maleimide are commercially available. Tris-imides provide a higher crosslink density. Particularly suitable for use in the present invention are the N, N'-bis-imides having the following general formula:

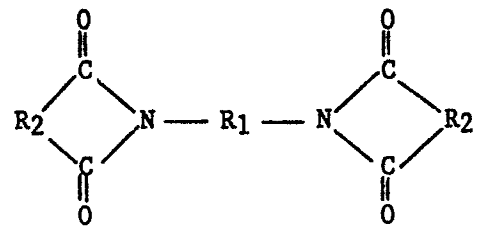

where $R_1$ is a divalent radical containing at least one carbon atom and

$R_2$ is a divalent radical containing a carbon-carbon double bond.

The divalent radical $R_1$ preferably has not more than 20 carbon atoms. $R_1$ may be, for example, a linear or branched alkylene group having from 2 to 12 carbon atoms, a cycloalkylene group having 5 or 6 carbon atoms, a heterocyclic group with 4 or 5 carbon atoms and at least one nitrogen, sulphur or oxygen atom in the heterocyclic ring or a mono or dicarbocyclic group. These groups may have substituents which do not give undesirable side-reactions. $R_1$ may also be two or more dicarbocyclic aromatic or cycloalkylene groups which are connected directly or by a divalent atom or group such as, for example, oxygen, sulphur, an alkylene group having 1 to 3 carbon atoms or one of the following groups:

$- NR_3 -$; $- P(O)R_4 -$; $- N = N -$; 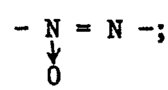

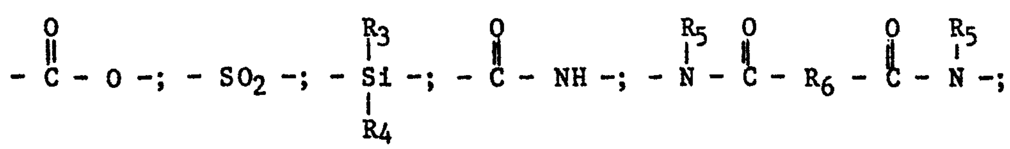

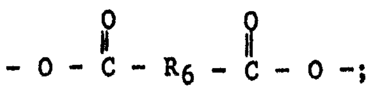

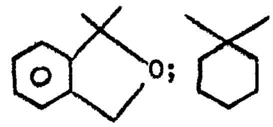

;

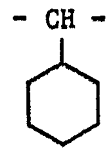

and 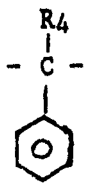

where $R_3$, $R_4$, $R_5$ and $R_6$ are alkyl groups having from 1 to 5 carbon atoms.

The divalent radical $R_2$ in the above bis-imide formula may be derived from acids or anhydrides such as, for example, maleic acid citraconic acid, tetrahydronaphthalic acid and nadic methyl anhydride. Preferably, $R_2$ is a group having one of the following structural formulae:

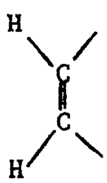

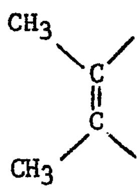

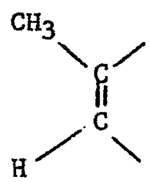

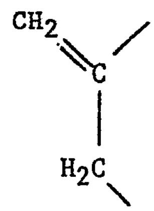

Suitable bis-imides include:

di(4-maleimidophenyl) methane
2,4-bismaleimido-toluene
1,6-bismaleimido-2,2,4-trimethylhexane
N,N$^{1}$-hexamethylene dimaleimide
N,N$^{1}$-p-phenylene dimaleimide
1,2-bismaleimido ethane
N,N$^{1}$-4,4$^{1}$-diphenyl ether bismaleimide
N,N$^{1}$-4,4$^{1}$-diphenyl sulphone bismaleimide
N,N$^{1}$-4,4$^{1}$-diphenyl cyclohexane bismaleimide
1,6-bismaleimido hexane
1,12-bismaleimido dodecane
1,3-bismaleimido benzene
1,4-bismaleimido benzene
4,4$^{1}$-bismaleimido diphenyl sulphide
4,4$^{1}$-bismaleimido dicyclohexyl methane

2,6-bismaleimido toluene

$N,N^{1}$-m-xylylene bismaleimide

$N,N^{1}$-p-xylylene bismaleimide

$N,N^{1}$-m-phenylene bis-citraconomide

$N,N^{1}$-4,$4^{1}$ diphenyl methane bis-itaconimide

A mixture of bismaleimides may be used.

British Patent No. 1190718 discloses cross-linked resins obtained by reacting bis-imides and a diamine of the formula $H_2N-X-NH_2$ where X is a divalent organic radical of not more than 30 carbon atoms. The curable compositions according to the present invention may also contain a diamine having the same general formula. Suitable diamines are disclosed in GB 1190718 and include, for example, bis-(4-aminophenyl) methane, bis-(4-aminophenyl) ether and 1,1-bis-(4-aminophenyl) cyclohexane. Preferably the molar ratio of bis-imide to diamine is from 1:2 to 50:1 and is more preferably from 1.3:1 to 5:1. Preferably the bis-imide is reacted with the diamine prior to the addition of the vinyl ester.

US Patent No. 4211861 discloses a thermosetting imide resin obtained by reacting a bis-imide with at least one hydrazide of an amino acid having the general formula:

$$H_2N - Y - \overset{\overset{\displaystyle O}{\|}}{C} - NH - NH_2$$

in which Y is a divalent organic group. The curable compositions according to the present invention may also contain at least one hydrazide having the above general formula. Suitable hydrazides are disclosed in US 4211861 and include, for example, m-amino benzoic acid hydrazide, p-amino benzoic acid hydrazide, $\epsilon$-amino caproic acid hydrazide, $\gamma$-amino butyric acid hydrazide, amino acetic acid hydrazide and $\delta$-amino valeric acid hydrazide. The molar ratio of the bis-imide to amino acid hydrazide is preferably 1.1:1 to 10:1. The bis-imide and the amino acid hydrazide may be reacted together at a temperature of from 80°C to 180°C for a predetermined time to produce a product which can still be moulded. The vinyl ester resin composition may then be added to this reaction product to form a curable composition according to the present invention.

Alternatively the three components may simply be mixed together to form a curable composition.

Vinyl ester resins suitable for use in the present invention are known and some are commercially available. They may be prepared, according to known techniques, by reacting an ethylenically unsaturated monocarboxylic acid with an epoxy resin generally in the presence of a catalyst such as, for example a tertiary amine, a phosphine or an alkali or onium salt. The ester has terminal vinyl groups.

Suitable unsaturated monocarboxylic acids include acrylic acid, methacrylic acid, cinnamic acid and crotonic acid.

Epoxy resins, i.e. substances containing on average more than one 1,2 epoxide group per molecule are known. For example, an extensive list of commercially available epoxy resins is given in "Handbook of Epoxy Resins" by Lee and Neville, McGraw-Hill Inc (1967). Epoxy resins suitable for use in the present invention include diglycidyl ethers of bisphenol A and homologues thereof, epoxylated phenol-formaldehyde novolak resins, propylene oxide diepoxide and glycidyl amine epoxies such as tri-glycidyl amino phenol and tetraglycidyl methylene dianiline.

Suitable vinyl ester resins include those having the following general formulae:

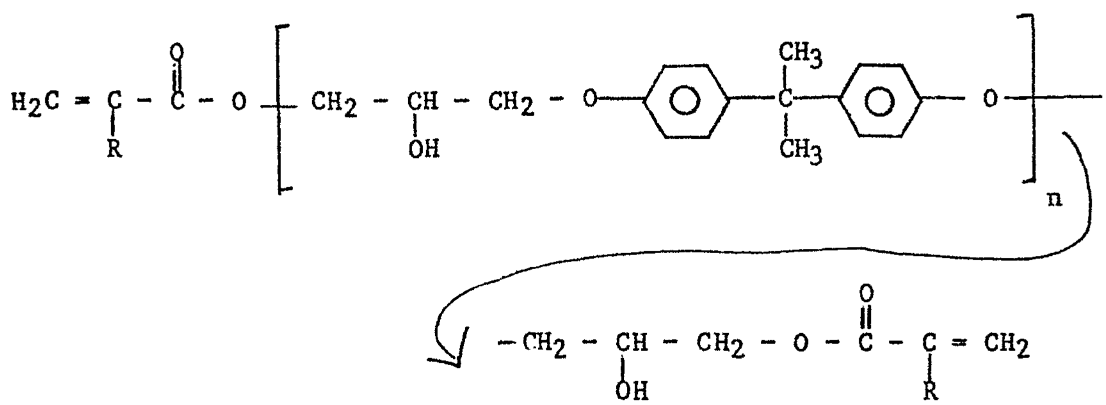

where n is from 1 to 3

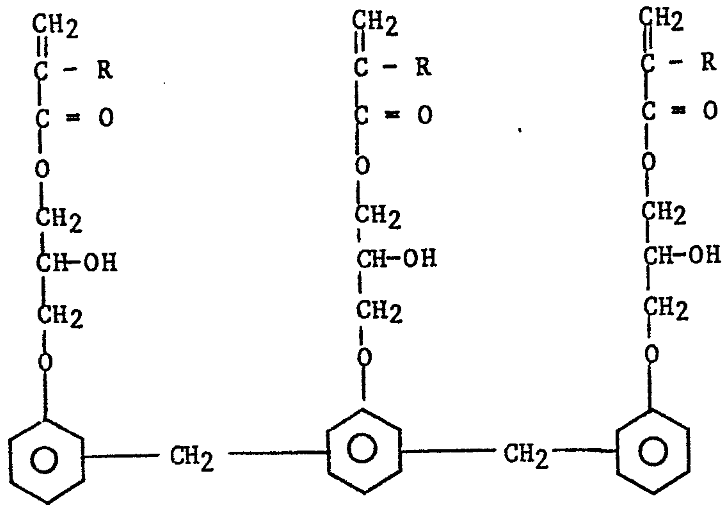

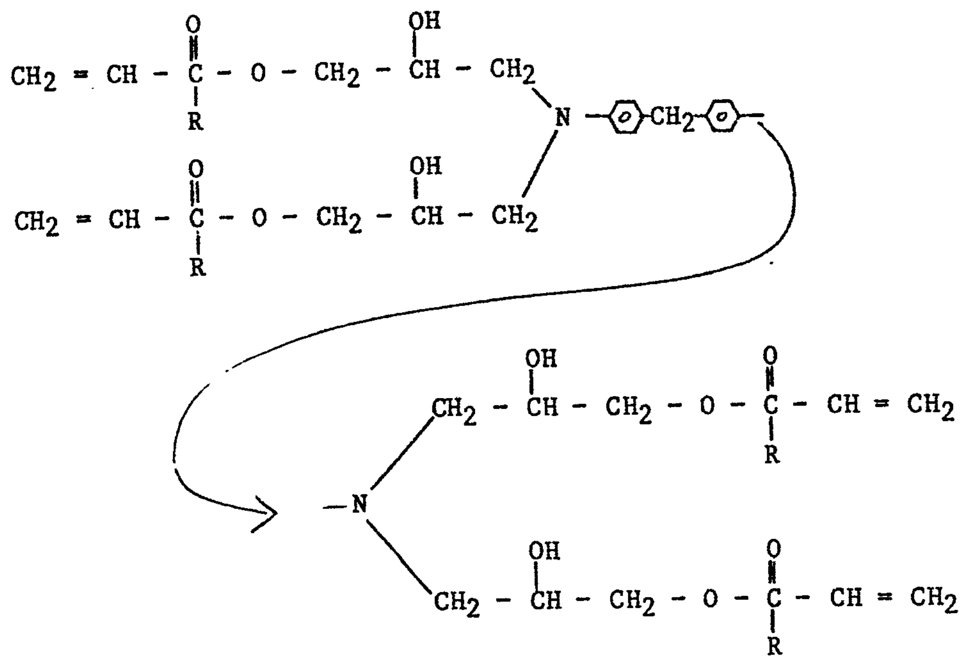

and

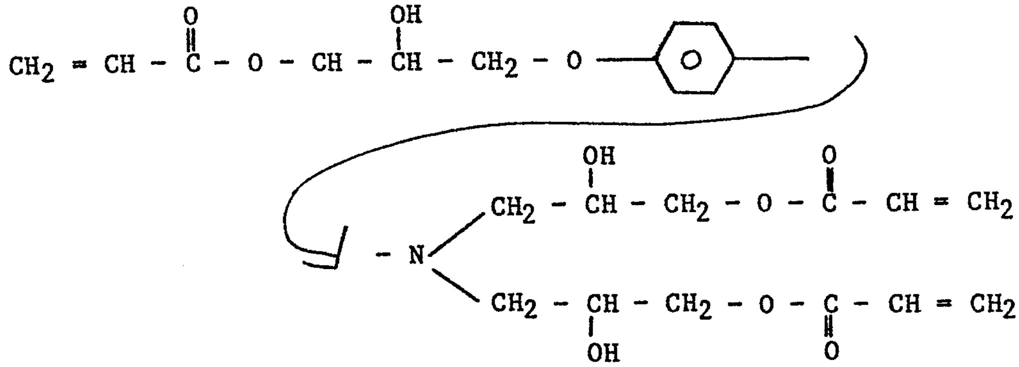

where R in each of the above formulae is H or $CH_3$.

Preferably the amount of vinyl ester used in the composition is from 5 to 90, more preferably 10 to 50 and most preferably 25 to 50 parts per hundred parts of the polyimide prepolymer.

The compositions according to the present invention may also contain other components which are known for use in vinyl ester or polyimide compositions such as, for example, curing or hardening agents, fillers, pigments, extenders and flexibilisers. For example, the compositions according to the present invention may contain triallyl isocyanurate which tends to increase the heat distortion temperature of the cured material and lower the melting point of the composition before curing. Divinyl benzene or diallyl phthalate may also lower the melting point of the composition before curing and divinyl benzene may also lower the curing temperature. The composition according to the invention may also contain one or more elastomer which is compatible with the polyimide and vinyl ester.

The amount of curing agent which may be included in the compositions according to the present invention is typically from 0.05 to 2.5 parts by weight per hundred parts by weight of the total resin composition. The amount of elastomers which may be included is typically from 1 to 20 parts by weight and the other additives from 1 to 30 parts by weight.

The polyimide composition according to the present invention may be prepared by mixing together the polyimide prepolymer and vinyl ester at an elevated temperature which is above the melting point of both the polyimide resin and the vinyl ester but below the curing temperature of the polyimide prepolymer. Typically, the components are blended together at a temperature in the range 80 to 120°C.

Additives may generally be added to either the molten poly-imide prepolymer or vinyl ester. A curing agent, if present, is preferably added to the blend of vinyl ester and poly-imide prepolymer. If a solid elastomer is to be included, it is preferably added dissolved in a suitable solvent such as, for

example, methylene chloride or acetone, and the temperature of the blend maintained at a sufficiently high temperature to remove the solvent.

The compositions may be cured using conventional techniques. The temperature and time used for curing the compositions will depend on the components used and their relative proportions. Typically, a composition based on a bis-imide such as a bis-maleimide may be cured by heating at a temperature in the range 120 to 200°C for a period of from 2 to 20 hours. The compositions may be post-cured e.g. by heating at a temperature of from 200 to 250°C for a period of from 4 to 24 hours.

The polyimide compositions according to the present invention are particularly suitable for use as a matrix material for fibre reinforced compositions. Suitable fibres for use in such compositions include glass fibres, carbon fibres, boron fibres, silicon-carbide fibres and organic synthetic fibres such as aramides.

Prepreg material may be prepared by using known techniques to coat woven or non-woven webs, filaments or rovings with a polyimide composition according to the present invention. The polyimide composition may be applied to the fibres in the form of a solution but is preferably applied as a hot melt. Typically, the prepreg comprises 20 to 50% by weight of the polyimide composition, preferably 25 to 40% by weight. A prepreg material according to the present invention may be used and cured using conventional techniques and apparatus. For example, the prepreg material may be laid up in a suitable mould and then heated in an autoclave or pressclave at elevated temperature and pressure. Typically, the pressure used will be from 50 to 300 psi and the mould is heated at the rate of 1 to 5°C per minute to a temperature in the range 170 to 210°C and maintained at that temperature for 1 to 5 hours. The article may then be post-cured at a higher temperature e.g. 210 to 250°C for a period of from 4 to 24 hours.

The invention is illustrated by the following examples.

**Example 1**

Four curable resin compositions, according to the present invention, were prepared by blending different amounts of a vinyl ester with a molten mixture of bismaleimides.

The bismaleimide mixture used was a commercially available resin sold by Technochemie under the trade name Compimide 353 and comprised a mixture of three bismaleimides viz.di(4-maleimidophenyl) methane, 2,4-bismaleimido-toluene and 1,6-bismaleimido-2,2, 4-trimethylhexane. COMPIMIDE is a trade mark. The mixture comprised approximately 85% by weight of the aromatic bismaleimides and 15% by weight of the aliphatic bismaleimide. The resin was a eutectic mixture with an overall melting point of 70 - 125°C.

The vinyl ester used was a commercially available bisphenol-A vinyl ester having the following general formula;

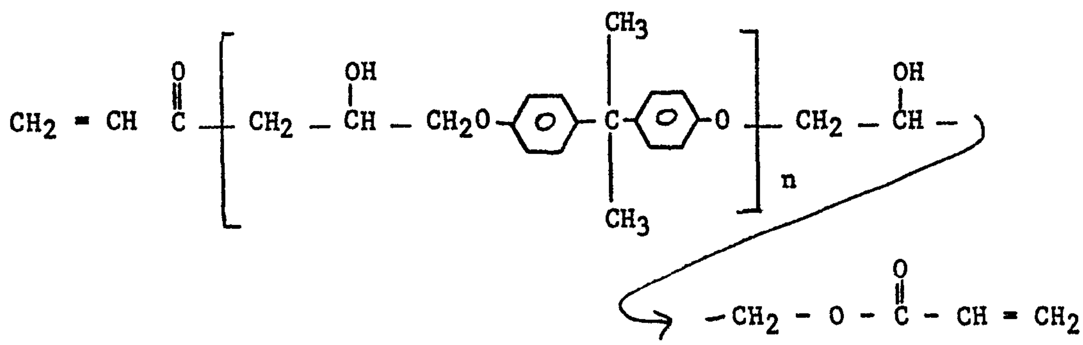

where n = 1 or 2

The proportion of the vinyl ester to the mixture of bismaleimides for each of the four compositions according to the present invention is given in Table 1.

The blends of vinyl ester and bismaleimides were de-gassed in order to ensure void free castings and then poured into moulds which had been preheated to a temperature of 170°C. The compositions were cured at 170°C for one hour, followed by heating at 210°C for 16 hours.

Samples of the cured compositions were subjected to the standard test method ASTM D790-71 Test for Flexural Properties of Plastics in order to determine the flexural moduli and strengths of the compositions at 22°C, 130°C and 200°C. The Charpy Impact Resistance of samples of the cured compositions was determined

by the standard test method BS 2782 Part 3, Method 351A (1977). The results are given in Table 1.

For comparison, the flexural moduli and strengths and Charpy Impact Resistance of the mixture of bismaleimides cured in the same way but in the absence of vinyl ester were also measured and the results are also given in Table 1.

The results in Table 1 show that the inclusion of vinyl ester improves the toughness of the polyimide mixture as indicated by the increase in Charpy Impact Resistance.

Samples of Composition D and the Comparative Composition were placed in water maintained at 70°C for 336 hours. At the end of this period, the Comparative Composition was found to have absorbed 5.5% by weight of water whereas Composition D had absorbed only 3.1% by weight.

Example 2

A curable composition according to the present invention was prepared by blending 50 parts by weight of the same vinyl ester as used in Example 1 with 100 parts by weight of the same commercially available bismaleimide mixture as used in Example 1. To this blend was added 0.25% by weight (based on the total weight of the blend) of diazobicyclo-octane, as a curing agent. The composition was then used to prepare a prepreg material comprising unidirectional fibres. The prepreg was prepared by the known solvent technique using commercially available carbon fibres and a 60% by weight solution of the resin composition in acetone. The prepreg material was moulded using a matched mould technique and then samples of the material were subjected to the test method ASTM D790-71 to determine the flexural strength and modulus, at 22°C and 200°C, of the cured, reinforced composition, in the direction of the fibres. The interlaminar shear strength of the cured, reinforced composition was also determined at 22°C and 200°C using the standard test method ASTM D2733-70. The results which are given in Table 2 show that the composition retained more than 60% of its interlaminer shear strength and flexural strength and more than 95% of its flexural modulus at the higher temperature.

Table 1

| Composition | Amount of vinyl ester (parts/100 parts of bismaleimide) | Flexural Modulus (GPa) | | | Flexural Strength (MPa) | | | Charpy Impact Resistance ($kJm^{-2}$) |
|---|---|---|---|---|---|---|---|---|
| | | 22°C | 130°C | 200°C | 22°C | 130°C | 200°C | 22°C |
| Comparative Composition | 0 | 3.35 | 2.89 | 1.34 | 31.7 | 14.5 | 11.1 | 2.00 |
| A | 6.25 | 4.17 | 3.77 | 1.36 | 30.0 | 14.5 | 17.1 | 3.08 |
| B | 12.50 | 4.19 | 3.65 | 1.52 | 43.8 | 26.5 | 23.7 | 4.75 |
| C | 25.00 | 4.21 | 3.39 | 1.47 | 52.4 | 35.4 | 27.2 | 6.20 |
| D | 50.00 | 4.50 | 3.2 | 1.46 | 73.1 | 38.6 | 46.9 | 8.80 |

**Table 2**

| Physical Property | Temperature | |
|---|---|---|
| | 22°C | 200°C |
| Interlaminar shear strength (MPa) | 61 | 40 |
| Flexural strength (MPa) | 2060 | 1290 |
| Flexural Modulus (GPa) | 114 | 110 |

Example 3

A curable composition according to the present invention was prepared by blending 50 parts by weight of the same vinyl ester as used in Example 1 with 100 parts by weight of a commercially available bismaleimide sold by Technochemie under the trade name Compimide 795. The bismaleimide is believed to have been prepared by the process described and claimed in US Patent 4,211,861 wherein at least one N,N'-bisimide of an unsaturated dicarboxylic acid is reacted with at least one hydrazide of an amino acid to give a prepolymer having the general formula:

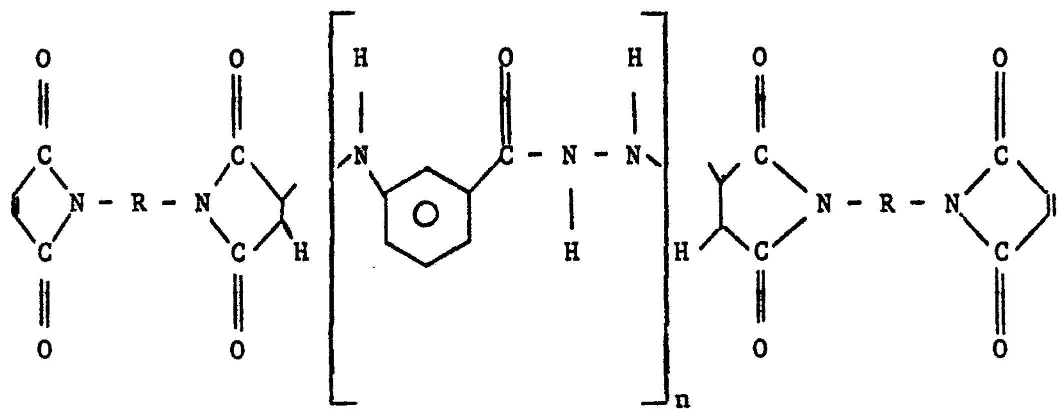

The composition was moulded and cured in the same manner as described in Example 1. The Charpy Impact Resistance of the cured composition according to the invention was 9.02 $KJm^{-2}$ whereas the Charpy Impact Resistance of the bismaleimide resin in the absence of the vinyl ester was only 4.49 $KJm^{-2}$.

Example 4

Example 3 was repeated except that the bismaleimide resin used was a commercially available resin sold by Technochemie under the trade name Compimide 800. This resin comprises the same bismaleimide prepolymer as the Compimide 795 used in Example 3 but also comprises approximately 4% by weight of an elastomer and 6% by weight of diallyl phthalate. A further 8 parts by weight of diallylphthalate and 0.25 parts of DABCO were also added to and mixed with the blend of bismaleimide and vinyl ester. The composition was moulded and cured in the same manner as described in Example 1. The Charpy Impact Resistance of the cured composition according to the present invention was 11.9 $KJm^{-2}$ whereas the Charpy Impact Resistance of the composition in the absence of the vinyl ester was only 5.2 $KJm^{-2}$.

The amount of water absorbed by a sample of the cured composition according to the present invention after immersion in water at 70°C for 336 hours was 3.0% by weight. In comparison, the composition in the absence of the vinyl ester absorbed 5.4% by weight.

Example 5

Fibre reinforced samples were prepared by reinforcing the composition according to Example 4 with fibres. Samples of a Comparative Composition which was the same as the composition of Example 4 except that it contained no vinyl ester were also reinforced in the same manner. The fibre reinforced samples were prepared by prepregging commercially available carbon fibres by the known hot melt technique and moulding the samples by compression moulding. The samples were cured by heating to 140°C at a heating rate of 3°C/min, applying a pressure of 60 psi, continuing the heating at the same rate up to 190°C and maintaining this temperature for 3 hours. The samples were cooled under pressure to ambient temperature (about 22°C) and then removed from the moulds and post cured at 240°C for 16 hours. The fracture toughness of the cured, reinforced compositions was determined by the double cantilever beam method described in Boeing Aircraft Corporation

Specification B/7080/00/480 (Area Method) and also in J. Reinforced Plastics and Composites 1982 Vol. 1, page 297, J. Whity et al.

The fracture toughness of the composition according to the invention was 350 $Jm^{-2}$ whereas the fracture toughness of the Comparative Composition which contained no vinyl ester was only 260 $Jm^{-2}$.

0167304

Claims:

1. A curable thermosetting polyimide composition comprising a major proportion of a polyimide prepolymer and a minor proportion of a vinyl ester.

2. A composition as claimed in claim 1 in which the polyimide prepolymer is an N,N'-bis-imide having the general formula:

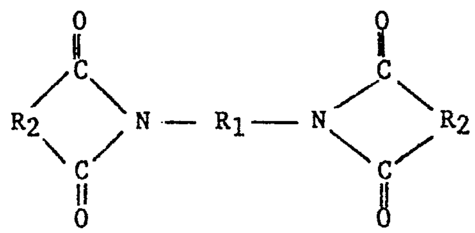

where $R_1$ is a divalent radical containing at least one carbon atom and

$R_2$ is a divalent radical containing a carbon-carbon double bond

3. A composition as claimed in claim 2 in which the divalent radical $R_1$ has from 1 to 20 carbon atoms.

4. A composition as claimed in claim 2 or claim 3 in which $R_2$ is selected from the group comprising:

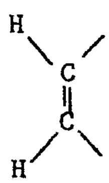 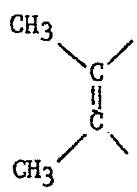 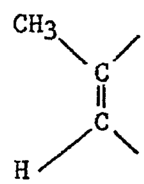 and 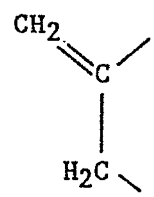

5. A composition as claimed in any one of claims 1 to 4 which also comprises a diamine having the general formula $H_2N-X-NH_2$ where X is a divalent organic radical having not more than 30 carbon atoms.

6. A composition as claimed in any one of claims 1 to 4 which also comprises a hydrazide of an amino acid which has the general formula:

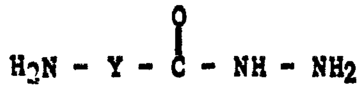

in which Y is a divalent organic radical.

7. A composition as claimed in any one of claims 1 to 6 in which the vinyl ester is the reaction product of (A) an unsaturated monocarboxylic acid selected from the group comprising acrylic acid, methacrylic acid, cinnamic acid and crotonic acid and (B) an epoxy resin selected from the group comprising a diglycidyl ether of bisphenol A, an epoxylated phenol-formaldehyde novolak resin, propylene oxide diepoxide and a glycidyl amine epoxy.

8. A composition as claimed in claim 7 in which the vinyl ester is selected from those having one of the following general formula:

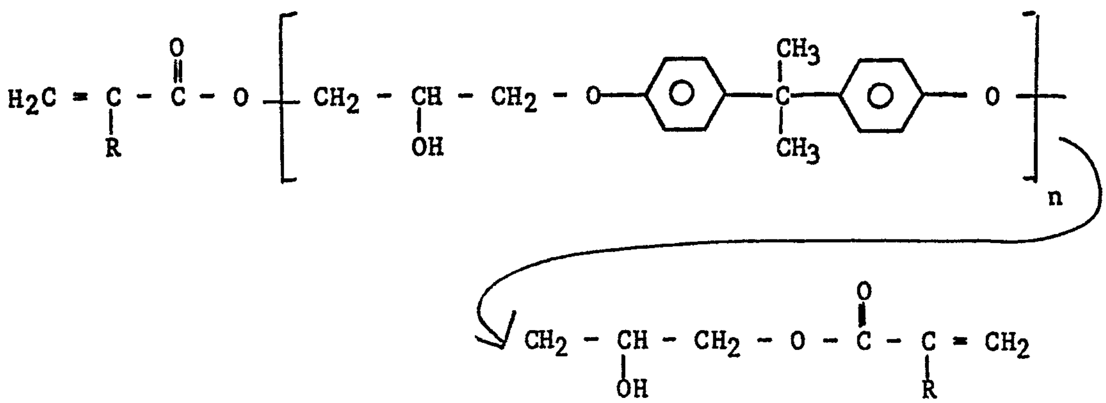

where n is from 1 to 3

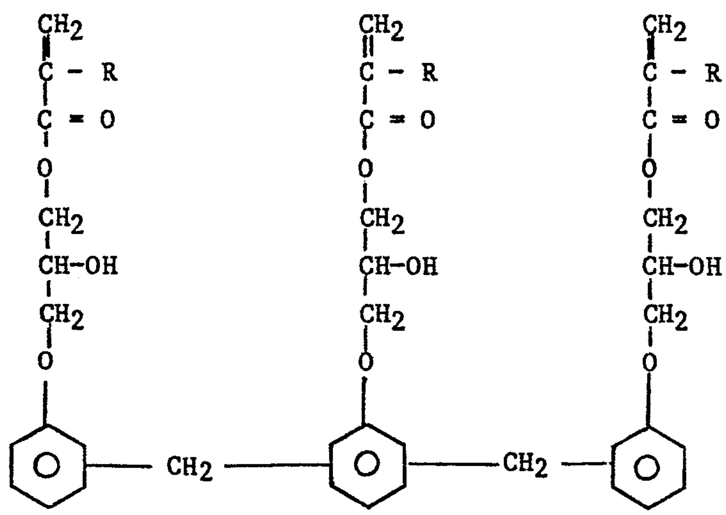

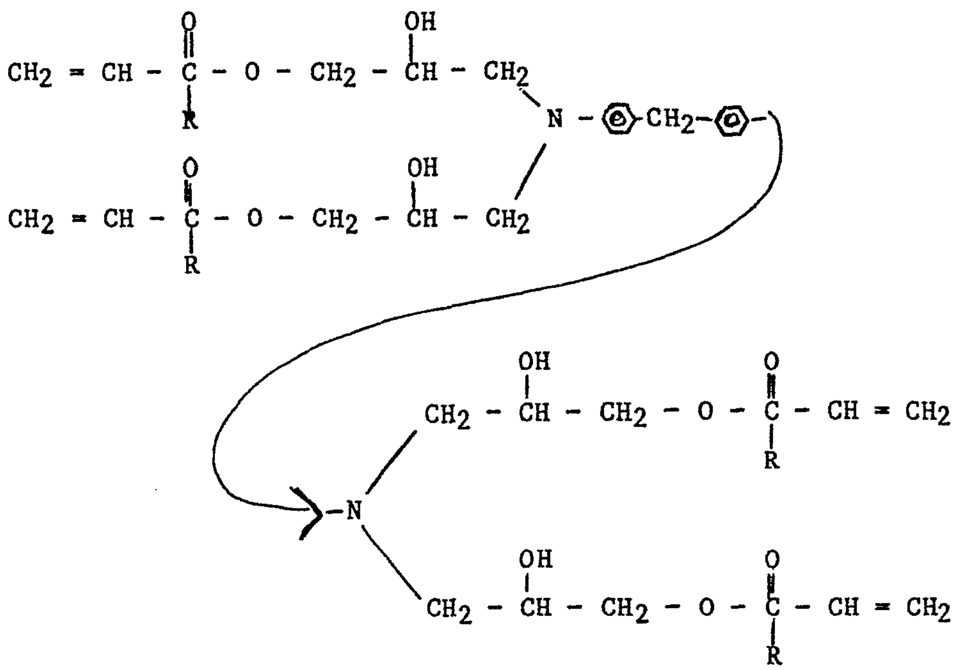

and

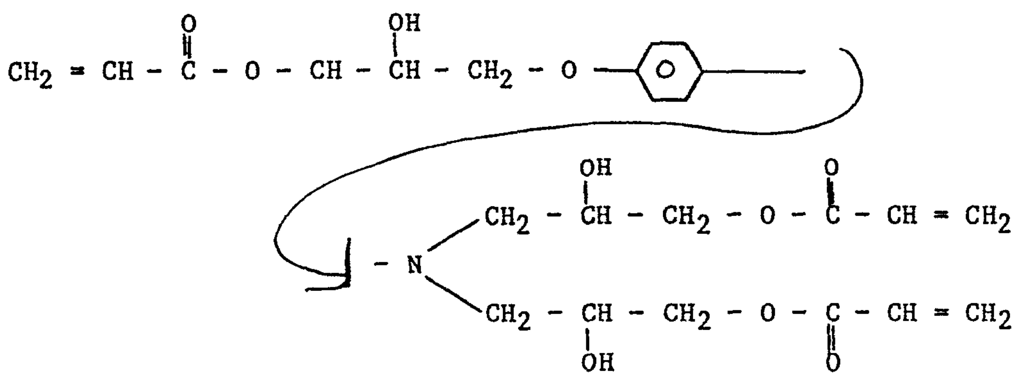

**9.** A composition as claimed in any one of claims 1 to 8 in which the amount of vinyl ester is from 10 to 50 parts by weight per hundred parts by weight of the polyimide prepolymer.

**10.** A composition as claimed in claim 9 in which the amount of vinyl ester is from 25 to 50 parts by weight per hundred parts by weight of the polyimide prepolymer.

**11.** A process for producing a composition as claimed in any one of claims 1 to 10 which process comprises mixing the polyimide prepolymer and vinyl ester at an elevated temperature which is above the melting point of both the polyimide resin and the vinyl ester but below the curing temperature of the polyimide prepolymer.

12. A process as claimed in claim 11 wherein the temperature is from 80 to 120°C.

13. A process for producing a cured thermoset composition comprises heating a composition as claimed in any one of claims 1 to 10 to a temperature of from 120 to 200°C for a period of from 2 to 20 hours.

14. A cured thermoset composition obtainable by the process claimed in claim 13.

15. A composite material comprising a composition as claimed in claim 14 reinforced with fibres.

16. A prepreg material comprising woven or non-woven webs, filaments or rovings impregnated with from 20 to 50% by weight of a composition as claimed in any one of claims 1 to 10.

0167304

Application number

European Patent Office

# EUROPEAN SEARCH REPORT

EP 85 30 4041

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | FR-A-2 160 607 (GENERAL ELECTRIC)<br>* Page 1, line 1 - page 7, line 16; page 9, lines 7-32; claims * | 1-16 | C 08 G 73/12<br>C 08 L 79/08 //<br>C 08 L 63:10 |
| Y | CHEMICAL ABSTRACTS, vol. 79, no. 2, 16th July 1973, page 40, no. 6136b, Columbus, Ohio, US; & JP - A - 73 20 886 (TOKYO SHIBAURA ELECTRIC CO., LTD.) 15-03-1973 | 1-16 | |
| Y | GB-A-2 009 767 (TECHNOCHEMIE GmbH)<br>* Claims * & US - A - 4 211 861 (Cat. D) | 1,6 | |
| Y | DE-A-3 105 056 (HITACHI)<br>* Claims * | 1 | TECHNICAL FIELDS SEARCHED (Int. Cl.4)<br>C 08 G<br>C 08 L |

The present search report has been drawn up for all claims

| Place of search | Date of completion of the search | Examiner |
|---|---|---|
| THE HAGUE | 03-10-1985 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document